# EUROPÄISCHE PATENTSCHRIFT

(11) **EP 1 525 116 B1**
(45) Veröffentlichungstag und Bekanntmachung des Hinweises auf die Patenterteilung: **16.11.2005**
(21) Anmeldenummer: 03766154.3
(22) Anmeldetag: 11.07.2003
(51) Int. Cl.: B60Q 1/04

(54) **BEFESTIGUNGSSYSTEM FUER SCHEINWERFER AN EINEM TRAEGERTEIL EINES FAHRZEUGES**
SYSTEM FOR FIXING HEADLIGHTS ON A CARRIER PART OF A VEHICLE
SYSTEME DE FIXATION DE PHARES A UNE PARTIE DE SUPPORT D'UN VEHICULE A MOTEUR

(30) Priorität: 27.07.2002 DE 10234225
(43) Veröffentlichungstag der Anmeldung: 27.04.2005
(73) Patentinhaber: Hella KGaA Hueck & Co., 59552 Lippstadt (DE)
(72) Erfinder: SEIGER, Ralf, 59556 Lippstadt (DE); RÖHR, Norbert, 59555 Lippstadt (DE); DERKUM, Jörg, 59590 Geseke (DE)
(86) Internationale Anmeldenummer: PCT/EP2003/007540
(87) Internationale Veröffentlichungsnummer: WO 2004/012961

(56) Entgegenhaltungen:
- DE-A- 3 610 361
- DE-A- 4 021 255
- DE-U- 29 724 220
- US-B1- 6 299 335

## Beschreibung

Die Erfindung betrifft ein Befestigungssystem für Scheinwerfer an einem Trägerteil eines Fahrzeugs mit mindestens zwei Steckverbindungen, die zwischen der Vorder- und Rückseite des Scheinwerfers angeordnet sind, und mit mindestens einer den Steckverbindungen zugeordneten Schnappverbindung.

Ein solches Befestigungssystem für Scheinwerfer ist aus der DE -A- 4 021 255 bekannt. Ein topfförmiges Trägerteil des Fahrzeugs nimmt den Scheinwerfer auf. Auf sich gegenüberliegen vertikalen Seiten weist der Scheinwerfer jeweils zwei abstehende Zapfen auf, die in eine Führung des Trägerteils eingreifen. Durch die vordere Öffnung des Trägerteils ist der Scheinwerfer in das Trägerteil eingeschoben. In der eingeschobenen Endstellung des Scheinwerfers liegt jeweils ein Zapfen an einer Anschlagfläche der beiden Führungen an. Eine Schnappverbindung, die an der unteren Seite des Scheinwerfers angeordnet ist, hält den Scheinwerfer mit einer federnden Anlagefläche gegen die Anschlagfläche der Führung. Die Schnappverbindung weist einen an dem Trägerteil angebrachten Rasthebel auf, der um eine Achse drehbar ist und in der Endstellung des Scheinwerfers eine Rastnase des Scheinwerfers mit einer Anschlagfläche selbsttätig hintergreift. Damit der schwenkbare Rasthebel den Scheinwerfer mit seinen Zapfen gegen die entfernt von der Schnappverbindung angeordnete Anschlagfläche der Führungen drücken kann, ist eine mit dem Rasthebel gekoppelte zusätzliche Feder notwendig. In den Führungen sind die Zapfen quer zur Einsetz- bzw. Steckrichtung des Scheinwerfers vertikal spielfrei gehalten, während die Zapfen in den Führungen horizontal ein großes Spiel aufweisen. Wegen Letzterem und da die Federkraft des schwenkbaren Rasthebels nicht beliebig groß auslegbar ist können im Fahrbetrieb am Scheinwerfer störende Vibrationen auftreten. Außerdem ist der Scheinwerfer nach seinem Einschieben in das topfförmige Trägerelement mit seinem vorderen Rand nicht umlaufend zum vorderen Rand der von dem Trägerelement gebildeten Aufnahmeöffnung ausgerichtet bzw. ist der vordere Rand des Trägerelements zur Ausrichtung des Scheinwerfers notwendig. Letzteres ist nicht möglich, wenn ein größerer Randabschnitt der Aufnahmeöffnung von einem beweglichen Fahrzeugteil wie beispielsweise der Motorhaube gebildet ist.

Aufgabe der Erfindung ist es, das im Oberbegriff des Anspruchs 1 beschriebene Befestigungssystem für einen Scheinwerfer derart zu verbessern, dass der Scheinwerfer bei der Verwendung von möglichst wenig Einzelteilen sicher und möglichst spannungsfrei an dem Trägerteil des Fahrzeugs festsetzbar ist. Diese Aufgabe wird nach der Erfindung dadurch gelöst, dass die zwei Steckverbindungen aus Steckteilen bestehen, die zusammen den Scheinwerfer quer zur Steckrichtung in alle Richtungen an dem Trägerteil spielfrei haltern, und die mindestens eine Schnappverbindung den Scheinwerfer zwischen zwei eigenen Anlageflächen in und entgegen der Steckrichtung spielfrei haltert, wobei für die beiden Steckverbindungen die eigenen Anlageflächen der Schnappverbindung die einzigen zur Halterung des Scheinwerfers in und entgegen der Steckrichtung sind. Dadurch können die Anschlagflächen der Schnappverbindung einstückig herstellt sein und der Scheinwerfer ist vibrationsfrei in und entgegen der Steck- bzw. Montagerichtung des Scheinwerfers halterbar. Hierbei sind die Steckverbindungen frei von Anlageflächen, die den Scheinwerfer in und entgegen seiner Steckrichtung haltern. Außerdem ist der Scheinwerfer nach seinem Einschieben in das Trägerteil mit seiner eine Abschlussscheibe aufweisenden Vorderseite genau zum Rand einer Aufnahmeöffnung des Fahrzeugs ausgerichtet, ohne dass der Rand der Aufnahmeöffnung des Trägerteils zur Ausrichtung des Scheinwerfers dienen muss.

Die Steckverbindungen sind leichtgängig ineinanderschiebbar, wenn von den beiden Steckverbindungen eine erste Steckverbindung den Scheinwerfer in alle Richtungen quer zur Steckrichtung und eine zweite Steckverbindung den Scheinwerfer ausschließlich vertikal haltert, wobei bei der zweiten Steckverbindung ein Steckteil gegenüber dem anderen Steckteil quer zur Steckrichtung horizontal verschiebbar ist. Dadurch bestehen quer zur Steckrichtung zwischen den Steckteilen keine Verspannungen. In diesem Zusammenhang ist es vorteilhaft, wenn die Steckteile der Steckvorrichtungen von einer Tasche und einem Zapfen gebildet sind, wobei die Mittelachse von Tasche und Zapfen parallel zur Steckrichtung verlaufen. Die Tasche kann zu der in und entgegen der Steckrichtung gerichteten Seite hin geöffnet sein.

Die mindestens eine Schnappverbindung ist besonders einfach und funktionssicher gestaltet, wenn die mindestens eine Schnappverbindung einen federnden Rastarm aufweist, der mit seinem freien Ende in Steckrichtung weist und an seinem freien Endabschnitt eine Rastnase und ein Anschlagelement aufweist, deren sich zugewandte Seiten zwei Anlageflächen der Schnappverbindung sind, zwischen denen ein Rastvorsprung mit sich abgewandten Seiten spielfrei eingreift. Hierbei ist es weiterhin vorteilhaft, wenn zwei federnde Rastarme zwischen der Vorder- und Rückseite des Scheinwerfers mit dem Scheinwerfer verbunden sind und sich mit ihrem freien Endabschnitt bis zum rückwärtigen Bereich des Scheinwerfers hin oder über diesen sich hinaus erstrecken. Die Rastarme der Steckverbindungen weisen wegen ihrer großen Länge an der Rastnase einen großen Federweg quer zur Steckrichtung auf. Dadurch ist die Schnappverbindung mit einer kleinen Rastkraft fügbar und die Rastnase kann wegen dem großen Federweg entsprechend lang ausgeführt sein und somit den Rastvorsprung verliersicher hintergreifen. Weiterhin ist die Schnappverbindung bei montierten Scheinwerfer von seiner Rückseite her gut zugänglich und somit leicht und schnell lösbar. Danach kann der Scheinwerfer aus der Aufnahmeöffnung des Fahrzeugs heraus gezogen werden.

Der Scheinwerfer ist bei einer einfachen Gestaltung der Schnappverbindung spielfrei und verliersicher in und entgegen der Steckrichtung an dem Trägerteil gehalten, wenn die Rastnase, das Anschlagelement und der Rastvorsprung zusammen mindestens eine schräg verlaufende Einfädelfläche aufweisen, an der der Rastvorsprung beim selbsttätigen Verrasten der Rastnase entlanggleitet. Dadurch verjüngen die Anlageflächen von Rastnase und Anschlagelement und/oder die Seiten des Rastvorsprungs zumindest abschnittsweise den zwischen ihnen liegenden Raum zum Rastarm hin und ein selbsttätiges Verrasten der Schnappverbindung ist sicher. Dadurch kann der Rastvorsprung relativ tief in zwischen die von Rastnase und Anschlagelement gebildete Vertiefung eingreifen und eine spielfreie Halterung des Rastvorsprungs zwischen der Rastnase und des Anschlagelements sind sicher.

Der Scheinwerfer ist besonders sicher an dem Trägerelement gehaltert, wenn den beiden Steckvorrichtungen jeweils eine Schnappverbindung zugeordnet ist.

Bei einer besonders vorteilhaften Weiterbildung der Erfindung besteht zusätzlich zu den Steckverbindungen und der mindestens einen Schnappverbindung mindestens eine weitere Befestigungsvorrichtung, die ein an den Scheinwerfer angeordnetes elastisch nachgiebiges Befestigungselement mit einem Langloch aufweist, das in seiner Längsausdehnung in Steckrichtung verläuft, wobei das Befestigungselement mittels eines in das Langloch eingreifenden Befestigungsbolzens an dem Trägerteil festsetzbar ist. Dadurch ist der Scheinwerfer auch an einer weiteren Seite geringfügig in oder entgegen zur Steckrichtung zum Fahrzeug ausrichtbar und an dem Fahrzeug festsetzbar.

Bei einer anderen vorteilhaften Weiterbildung der Erfindung besteht zusätzlich zu den beiden Steckverbindungen und der mindestens einen Schnappverbindung mindestens eine weitere Befestigungsvorrichtung, die von einer dritten Steckverbindung gebildet ist, die ein in Anbaulage des Scheinwerfers vertikal verstellbares Justageelement aufweist, das in ein Aufnahmeteil einschiebbar ist und dessen obere und untere Seite an dem Aufnahmeteil anliegt und dadurch den Scheinwerfer vertikal haltert. Hierbei ist es weiterhin zweckmäßig, wenn das Justageelement eine Hohlschraube ist, die in eine Gewindeöffnung einer Lasche des Scheinwerfers selbsthemmend eingreift und spielfrei zwischen zwei Zinken eines gabelförmigen Halteelements des Trägerteils einschiebbar ist, wobei die Stimflächen der Hohlschraube an den Innenseiten der Zinken anliegen. Dadurch ist der Scheinwerfer nur durch Einschieben in die Steckverbindungen sicher an dem Trägerteil gehaltert und genau zu dem Rand der den Scheinwerfer aufnehmenden Karosserieöffnung ausgerichtet. Des weiteren besteht wegen den drei Befestigungspunkten keine statisch überbestimmte Befestigung, die zu Verspannungen führen könnte.

Ein Ausführungsbeispiel der Erfindung wird nachfolgend anhand einer Zeichnung beschrieben.
Es zeigen:

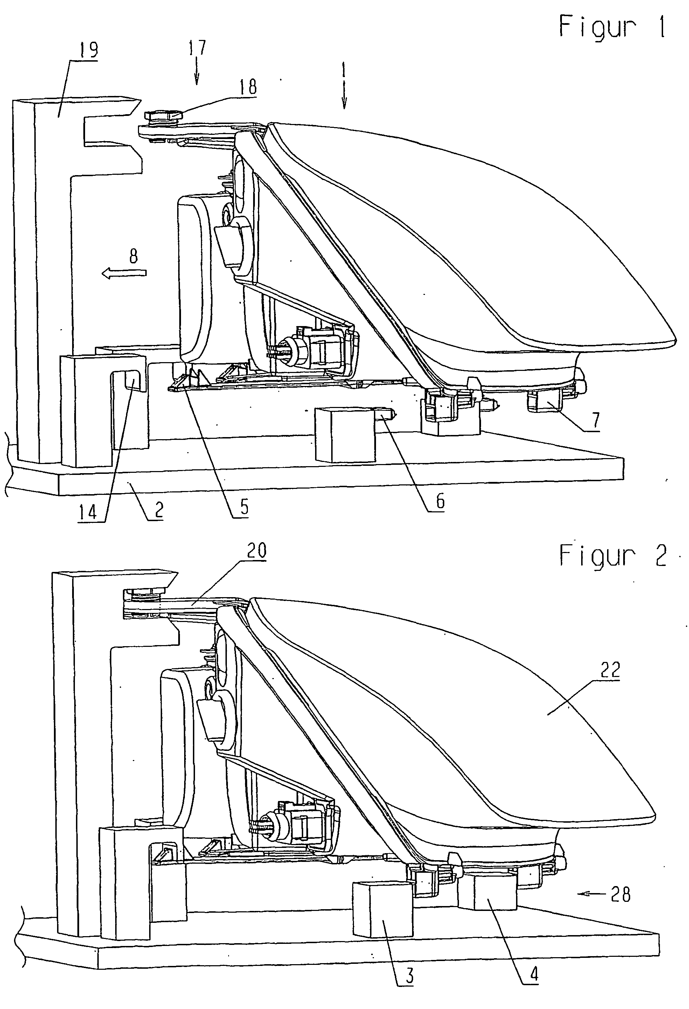

Figur 1 in einer perspektivischen Ansicht ein Befestigungssystem für einen Scheinwerfer vor dem Einschieben in ein Trägerteil eines Fahrzeugs,
Figur 2 in einer perspektivischen Ansicht den Scheinwerfer nach Figur 1 in einer genau zu dem Trägerteil ausgerichteten und fest mit dem Trägerteil verbundenen Endstellung,

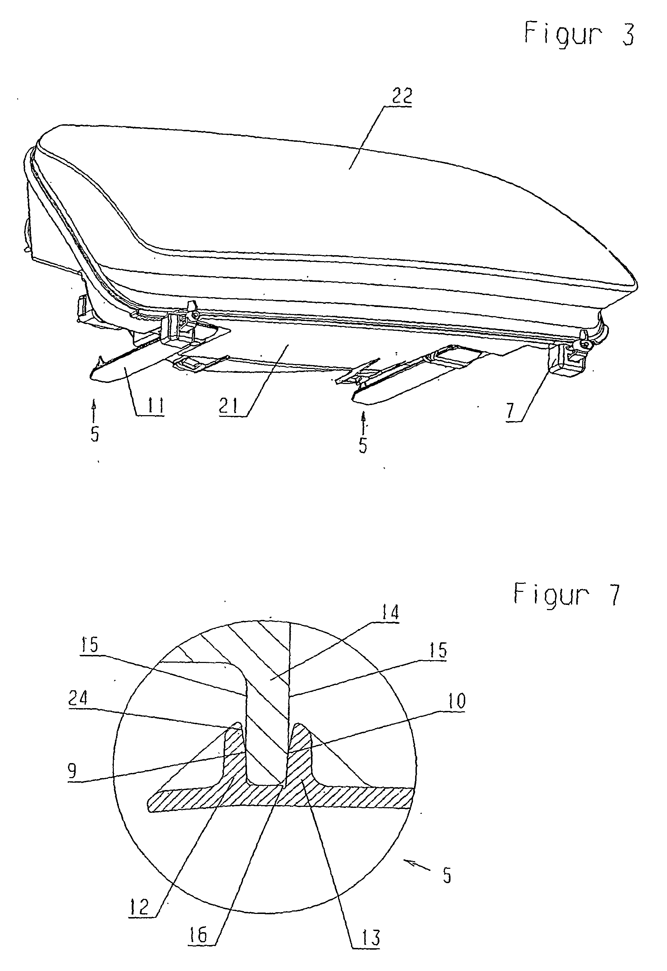

Figur 3 in einer perspektivischen Ansicht den Scheinwerfer von vome,

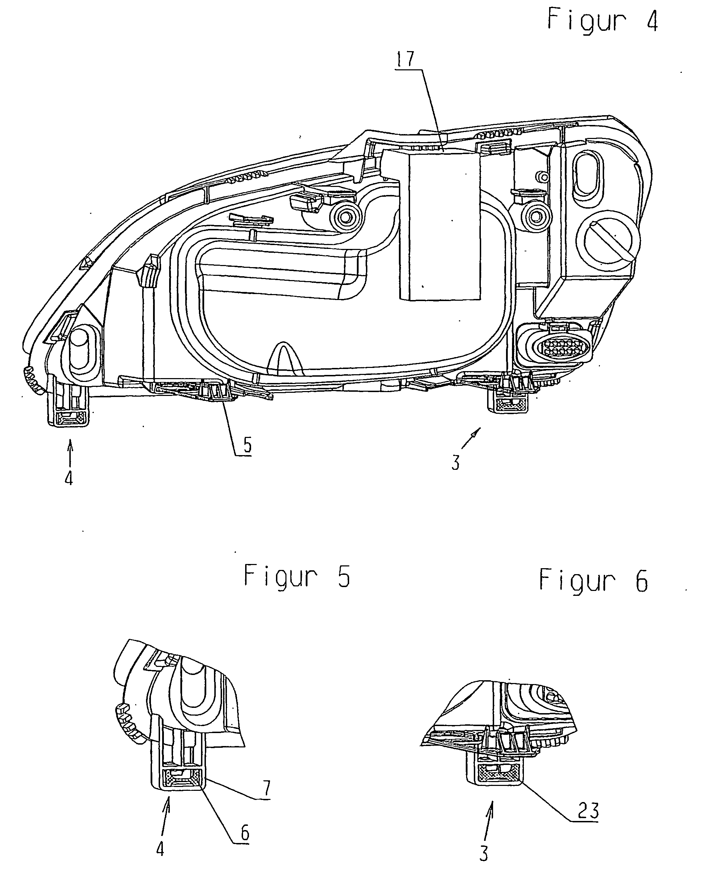

Figur 4 in einer Rückansicht den Scheinwerfer,
Figur 5 und 6 in einer vergrößert dargestellten Ansicht jeweils eine Einzelheit nach Figur 4 einer ersten bzw. zweiten Steckverbindung, die zwischen dem Scheinwerfer und dem Trägerteil bestehen,

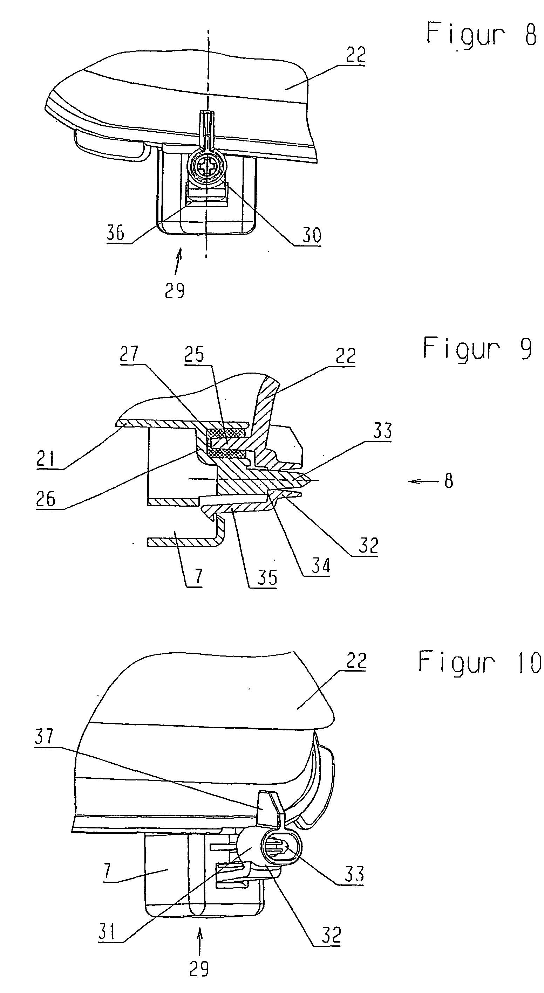

Figur 7 in einer Ansicht eine Einzelheit nach Figur 2 einer von zwei Schnappverbindungen,
Figur 8 in einer Vorderansicht eine Einzelheit nach Figur 3 eines Fixierungspunktes einer Fixierungsvorrichtung für eine Abschlussscheibe des Scheinwerfers,
Figur 9 in einem mittleren Längsschnitt den Fixierungspunkt nach Figur 8 und
Figur 10 in einer perspektivischen Ansicht eine Einzelheit nach Figur 3 eines weiteren Fixierungspunktes der Fixierungsvorrichtung.

Ein Scheinwerfer 1 für Fahrzeuge weist ein aus Kunststoff bestehendes topfförmiges Gehäuse 21 und eine die vordere Seite des Gehäuses 21 abschließende Abschlussscheibe 22 auf. Der Scheinwerfer 1 ist mittels einer ersten und zweiten Steckverbindung 3 und 4, zweier Schnappverbindungen 5 und einer Befestigungsvorrichtung 17 an einem Trägerteil 2 eines Fahrzeugs festsetzbar. Der Scheinwerfer 1 ist mit seiner Abschlussscheibe 22 in einer Fahrzeugöffnung (nicht dargestellt) angeordnet, zwischen deren Rand und der Abschlussscheibe 22 ein umlaufender Spalt und keine den Scheinwerfer haltemde Funktion besteht. Nach einem Endriegeln der Schnappverbindungen 5 ist der Scheinwerfer 1 leicht und schnell aus der Fahrzeugöffnung herausziehbar.

Zwei Steckverbindungen 3 und 4 sind auf der unteren Seite des Gehäuses 21 angeordnet und bestehen aus einem ersten und zweiten Steckteil 6 und 7. Als erstes Steckteil 6 dient ein Zapfen, der nach seinem Querschnitt ein freistehender Doppel T-Träger ist. Der mittlere Abschnitt des Doppel T-Trägers verläuft horizontal und die vertikalen Abschnitte 23 liegen mit ihren oberen und unteren Längsseiten an den Innenseiten einer als zweites Steckteil 4 dienenden Tasche an, die einen rechteckförmigen Querschnitt aufweist. Bei der ersten Steckverbindung 3 liegen die Abschnitte 23 des ersten Steckteils 6 mit ihren sich abgewandten breiten Außenflächen an den inneren vertikalen Schmalseiten des zweiten Steckteils 7 an, während bei der zweiten Steckverbindung 4 die Abschnitte 23 von den inneren Schmalseiten der taschenförmigen zweiten Steckteile 7 beabstandet sind. Dadurch ist der Scheinwerfer 1 an der ersten Steckverbindung 3 quer zur Steckrichtung 8 horizontal als auch vertikal gehaltert. An der zweiten Steckverbindung 4 ist der Scheinwerfer 1 vertikal gehaltert und quer zur Steckrichtung 8 horizontal verschiebbar. Die zweiten taschenförmigen Steckteile 4 sind an den unteren vorderen Randbereich des Gehäuses 21 angeformt. Die Anlageflächen zwischen dem ersten und zweiten Steckteil 6 und 7 sind in Steckrichtung 8 mindestens zweimal so lang ausgeführt wie die zapfenförmigen Steckteile 6 hoch sind.

Zwei Schnappverbindungen 5, welche jeweils einer der Steckverbindungen 3 bzw. 4 zugeordnet sind, sind zwischen den beiden Steckverbindungen 3 und 4 angeordnet. Die Schnappverbindungen 5 weisen jeweils einen an der unteren Seite des Gehäuses 21 angebrachten Rastarm 11 auf, der in Steckrichtung 8 weist und sich über die Rückseite des Scheinwerfers 1 hinaus erstreckt. Der Rastarm 11 ist eine flache, blattförmige Feder, deren breite Seitenflächen nach oben und unten gerichtet sind und die an der unteren Seite des Gehäuses 21 befestigt ist. Der Rastarm 11 weist an seinem freien Endabschnitt eine nach oben gerichtete Rastnase 12 auf, die einen nach unten gerichteten Rastvorsprung 14 des Trägerteils 2 selbsttätig hintergreift. Dabei liegt der Rastarm 11 mit einer vertikalen Federkraft an der Stirnfläche des Rastvorsprungs 14 an. Auf der der Rastnase 12 abgewandten Seite des Rastvorsprungs 14 ist an den Rastarm 11 ein Anschlagelement 13 angeformt. Die Rastnase 12 und das Anschlagelement 13 weisen an ihren sich zugewandten Anlageflächen 9 und 10 jeweils eine schräg verlaufende Einfädelfläche 24 auf, durch die die zwischen den Anlageflächen 9 und10 bestehende Aufnahme für den Rastvorsprung 14 sich zum Rastvorsprung 14 hin verbreitert. Der Rastvorsprung 14 liegt mit seiner Stirnfläche an dem Grund der Aufnahme an, in den eine quer zur Steckrichtung verlaufende Rinne 16 eingebracht ist. In die Rinne 16 greift ein Entformungsgrat des Rastvorsprungs 14 ein. Die Rastnase 12 liegt an der ihr zugewandten Seite 15 des Rastvorsprungs 14 federnd an und drückt den Rastvorsprung 14 mit der anderen Seite 15 gegen das Anschlagelement 13. Durch den quer zur Steckrichtung 8 federnden Rastarm 11 ist sicher, dass der Rastvorsprung 14 zwischen die Rastnase 12 und dem Rastvorsprung 14 eingreift und in und entgegen der Steckrichtung 8 spielfrei an dem Rastarm 11 gehalten ist. Somit ist außer dem Anschlagelement 13 des Rastarms 11 weder ein weiteres Anschlagelement noch ein zusätzliches federndes Element in Steckrichtung 8 den Steckverbindungen 3 und 4 zugeordnet.

Der Scheinwerfer 1 weist oberhalb seines Gehäuses 21 eine Befestigungsvorrichtung 17 auf, die aus einer an das Gehäuse 21 angeformten Lasche 20 und einem Justageelement 18 besteht. Die Lasche 20 weist in Einsteckrichtung 8 und trägt am freien Endabschnitt das Justageelement 18. Das Justageelement 18 ist eine Hohlschraube, die selbsthemmend in eine Gewindeöffnung der Lasche 20 eingeschraubt ist und mit ihrer Mittelachse vertikal verläuft. Das Justageelement 18 ist in ein gabelförmiges Aufnahmeteil 19 des Trägerteils 2 eingeschoben. Dabei liegt die Hohlschraube des Justageelements 18 mit ihrer oberen und unteren Stirnfläche an den sich zugewandten Seiten des gabelförmigen Aufnahmeteils 19 an und ist somit zwischen den Zinken der Gabel spielfrei gehalten. Die Lage der Lasche 20 kann auch durch eine Befestigungsschraube (nicht dargestellt), die durch die Hohlschraube des Justageelements 18 hindurchführt, an dem Fahrzeug gesichert sein. Statt ein Justageelement 18 zu verwenden kann die Lasche 20 vertikal federnd ausgeführt sein und eine Befestigungsschraube durch ein in Steckrichtung verlaufendes Langloch der Lasche 20 hindurchführen (nicht dargestellt).

Die Abschlussscheibe 22 ist aus Kunststoff hergestellt und weist an ihrem äußeren Rand einen Fuß 25 auf, der in ein umlaufendes U-förmiges Aufnahmebett 26 des Gehäuses 21 eintaucht. In das Aufnahmebett 26 ist eine den Fuß 25 umgebende Dichtungsmasse 27 eingebracht. Der Fuß 25 ist nach allen Seiten zu den Innenflächen des Aufnahmebetts 26 beabstandet, damit eine sichere Abdichtung zwischen der Abschlussscheibe 22 und dem Gehäuse 21 besteht. Um eine möglichst genaue Ausrichtung der Abschussscheibe 22 zu den Steckverbindungen 3 und 4 der Befestigungseinrichtung 28 zu erreichen, besteht zwischen der Abschussscheibe 22 und dem Gehäuse 21 eine Fixierungsvorrichtung 29. Die Fixierungsvorrichtung 29 weist einen ersten und zweiten Fixierungspunkt 30 bzw. 31 auf, die an jeweils einem Befestigungspunkt bzw. einer Steckverbindung 3 bzw. 4 der Befestigungseinrichtung 28 des Gehäuses 21 angeordnet ist Die Fixierungspunkte 30 und 31 sind jeweils von einem ersten und zweiten Steckelement 33 und 32 gebildet. Als erstes Steckelement 33 dient ein Zapfen, der entgegen der Steckrichtung 8 weist, benachbart zum Fuß 25 der Abschlussscheibe 22 angeordnet ist, an das zweite Steckteil 7 der Steckverbindungen 3 und 4 angeformt ist, der sich zu seinem freien Ende hin verjüngt und im Querschnitt X- bzw. kreuzförmig ausgeführt ist. Als zweites Steckelement 33 der Fixierungspunkte 30 und 31 dient ein Aufnahmeloch, das von einer an den äußeren unteren Rand der Abschlussscheibe 22 angeformten Hülse gebildet ist und bei dem ersten Fixierungspunkt 30 kreisrund und bei dem zweiten Fixierungspunkt 31 ein horizontal verlaufendes Langloch ist. Der Zapfen greift in das kreisrunde Aufnahmeloch quer zur Steckrichtung 8 in alle Richtungen und in das längliche Aufnahmeloch ausschließlich vertikal spielfrei ein. Der Zapfen und das Aufnahmeloch liegen mit in bzw. entgegen der Steckrichtung 8 gerichteten Anschlagflächen 34 aneinander. Die Anschlagfläche 34 des Zapfens ist von einer Schulter an seiner Mantelfläche und des Aufnahmeloches von ihrem Rand gebildet. An das hülsenförmige zweite Steckteil 32 ist zur Abschlussscheibe 22 hin eine mit der Vorderseite der Abschlussscheibe 22 verbundene Versteifungsrippe 37 und auf anderen Seite hin ein Rastelement 35 angeformt. Das Rastelement 35 ist eine in Steckrichtung weisende federnde Rastzunge, die mit einer Rastnase in eine in das zweite Steckteil 7 eingebrachte Rastöffnung 36 eingreift. In dem oberen Bereich der Abschlussscheibe 22 ist diese durch nicht dargestellte weitere Rastelemente an dem Gehäuse 21 gehalten.

Durch den ersten Fixierungspunkt 30 ist die Abschlussscheibe 22 quer zur Steckrichtung 8 in alle Richtungen fixiert, während der zweite Fixierungspunkt 31 die Abschussscheibe 22 quer zur Steckrichtung 8 nur vertikal fixiert. Dadurch entstehen zwischen den Fixierungspunkten 30 und 31 in der Abschlussscheibe 22 keine Verspannungskräfte.

### Bezugszeichenliste:

- 1.: Scheinwerfer
- 2.: Trägerteil
- 3.: erste Steckverbindung
- 4.: zweite Steckverbindung
- 5.: Schnappverbindung
- 6.: erstes Steckteil
- 7.: zweites Steckteil
- 8.: Steckrichtung
- 9.: Anlagefläche
- 10.: Anlagefläche
- 11.: Rastarm
- 12.: Rastnase
- 13.: Anschlagelement
- 14.: Rastvorsprung
- 15.: Seiten
- 16.: Rinne
- 17.: Befestigungsvorrichtung
- 18.: Justageelement
- 19.: Aufnahmeteil
- 20.: Lasche
- 21.: Gehäuse
- 22.: Abschlussscheibe
- 23.: Abschnitte
- 24.: Einfädelfläche
- 25.: Fuß
- 26.: Aufnahmebett
- 27.: Dichtungsmasse
- 28.: Befestigungseinrichtung
- 29.: Fixierungsvorrichtung
- 30.: erster Fixierungspunkt
- 31.: zweiter Fixierungspunkt
- 32.: zweites Steckelement
- 33.: erstes Steckelement
- 34.: Anschlagflächen
- 35.: Rastelement
- 36.: Rastöffnung
- 37.: Versteifungsrippe

## Patentansprüche

1. Befestigungssystem für Scheinwerfer (1) an einem Trägerteil (2) eines Fahrzeugs mit mindestens zwei Steckverbindungen (3 und 4), die zwischen der Vorder- und Rückseite des Scheinwerfers (1) angeordnet sind, und mit mindestens einer den Steckverbindungen (3 und 4) zugeordneten Schnappverbindung (5), **dadurch gekennzeichnet, dass** die zwei Steckverbindungen (3 und 4) aus Steckteilen (6 und 7) bestehen, die zusammen den Scheinwerfer (1) quer zur Steckrichtung (8) in alle Richtungen an dem Trägerteil (2) spielfrei haltern, und die mindestens eine Schnappverbindung (5) den Scheinwerfer (1) zwischen zwei eigenen Anlageflächen (9 und 10) in und entgegen der Steckrichtung (8) spielfrei haltert, wobei für die beiden Steckverbindungen (3 und 4) die eigenen Anlageflächen (9 und 10) der Schnappverbindung (5) die einzigen zur Halterung des Scheinwerfers (1) in und entgegen der Steckrichtung (8) sind.

2. Befestigungssystem nach Anspruch 1, **dadurch gekennzeichnet, dass** von den beiden Steckverbindungen (3 und 4) eine erste Steckverbindung (3) den Scheinwerfer (1) in alle Richtungen quer zur Steckrichtung (8) und eine zweite Steckverbindung (4) den Scheinwerfer (1) ausschließlich vertikal haltert, wobei bei der zweiten Steckverbindung (4) ein erstes Steckteil (6) gegenüber einem zweiten Steckteil (,7) quer zur Steckrichtung (8) horizontal verschiebbar ist.

3. Befestigungssystem nach Anspruch 1 oder 2, **dadurch gekennzeichnet, dass** die Steckteile (6 und 7) der Steckverbindungen von einer Tasche und einem Zapfen gebildet sind, wobei die Mittelachse von Tasche und Zapfen parallel zur Steckrichtung (8) verlaufen.

4. Befestigungssystem nach einem der Ansprüche 1 bis 3, **dadurch gekennzeichnet, dass** die mindestens eine Schnappverbindung (5) einen federnden Rastarm (11) aufweist, der mit seinem freien Ende in oder entgegen der Steckrichtung (8) weist und an seinem freien Endabschnitt eine Rastnase (12) und ein Anschlagelement (13) aufweist, deren sich zugewandte Seiten zwei Anlageflächen (9 und 10) der Schnappverbindung sind, zwischen denen ein Rastvorsprung (14) mit sich abgewandten Seiten (15) spielfrei eingreift.

5. Befestigungssystem nach Anspruch 4, **dadurch gekennzeichnet, dass** der federnde Rastarm (11) zwischen der Vorder- und Rückseite des Schweinwerfers (1) mit dem Scheinwerfer (1) verbunden ist und sich mit seinem freien Endabschnitt bis zum rückwärtigen Bereich des Scheinwerfers (1) hin oder über diesen hinaus erstreckt.

6. Befestigungssystem nach Anspruch 4 oder 5, **dadurch gekennzeichnet, dass** die Rastnase (12), das Anschlagelement (13) und der Rastvorsprung (14) zusammen mindestens eine schräg verlaufende Einfädelfläche (24) aufweisen, an der der Rastvorsprung (14) beim selbsttätigen Verrasten der Rastnase (12) entlanggleitet.

7. Befestigungssystem nach einem der Ansprüche 1 bis 6, **dadurch gekennzeichnet, dass** den beiden Steckverbindungen (3 und 4) jeweils eine Schnappverbindung (5) zugeordnet ist.

8. Befestigungssystem nach einem der Ansprüche 1 bis 7, **dadurch gekennzeichnet, dass** zusätzlich zu den Steckverbindungen (3 und 4) und der mindestens einen Schnappverbindung mindestens eine Befestigungsvorrichtung besteht, die ein an den Scheinwerfer angeordnetes elastisch nachgiebiges Befestigungselement mit einem Langloch aufweist, das in seiner Längsausdehnung in Steckrichtung verläuft, wobei das Befestigungselement mittels eines in das Langloch eingreifenden Befestigungsbolzens an dem Trägerteil festsetzbar ist.

9. Befestigungssystem nach einem der Ansprüche 1 bis 8, **dadurch gekennzeichnet, dass** zusätzlich zu den beiden Steckverbindungen (3 und 4) und der mindestens einen Schnappverbindung (5) mindestens eine Befestigungsvorrichtung (17) besteht, die von einer dritten Steckverbindung gebildet ist, die ein in Anbaulage des Scheinwerfers vertikal verstellbares Justageelement (18) aufweist, das in ein Aufnahmeteil (19) einschiebbar ist, dessen obere und untere Seite an dem Aufnahmeteil (19) anliegt und den Scheinwerfer (1) vertikal haltert.

10. Befestigungssystem nach Anspruch 9, **dadurch gekennzeichnet, dass** das Justageelement (18) eine Hohlschraube ist, die in eine Gewindeöffnung einer Lasche (20) des Scheinwerfers (1) selbsthemmend eingreift und spielfrei zwischen zwei Zinken eines gabelförmigen Aufnahmeteils (19) des Trägerteils (2) einschiebbar ist, wobei die Stirnflächen der Hohlschraube an den Innenseiten der Zinken anliegen.

## Claims

1. System for fixing headlights (1) on a support element (2) of a motor vehicle with at least two plug connections (3 and 4) arranged between the front and rear side of the headlight (1) and with at least one snap-on connection (5) associated with the plug connections (3 and 4), **characterised in that** the two plug connections (3 and 4) are composed of plug elements (6 and 7) which jointly secure the headlight (1) on the support element (2) in all directions without play and transversely to the plug direction (8), and the at least one snap-on connection (5) secures the headlight (1) between two of its abutment surfaces (9 and 10) without play in and against the plug direction (8), and for both plug connections (3 and 4) the abutment surfaces (9 and 10) of the snap-on connection (5) are the only ones for securing the headlight (1) in and against the plug direction (8).

2. System for fixing headlights according to Claim 1, **characterised in that** of the two plug connections (3 and 4) a first plug connection (3) secures the headlight (1) in all directions transversely to the plug direction (8) and a second plug connection (4) secures the headlight (1) exclusively vertically, and in the second plug connection (4) a first plug-in element (6) is, relative to a second plug-in element (7) transversely to the plug direction (8), horizontally transposable.

3. System for fixing headlights according to Claim 1 or 2, **characterised in that** the plug elements (6 and 7) of the plug connections are established by a pocket and a pin, and the centre axis of pocket and pin extends parallel to the plug direction (8).

4. System for fixing headlights according to one of Claims 1 to 3, **characterised in that** the at least one snap-on connection (5) comprises a sprung detent arm (11) facing with its free end in or against the plug direction (8) and which has at its free end section a detent nose (12) and a stop element (13), the sides of which facing each other are two stop surfaces (9 and 10) of the snap-on connection and with a detent protrusion (14) engaging thereinbetween without play with sides facing away from each other (15).

5. System for fixing headlights according to Claim 4, **characterised in that** the sprung detent arm (11) is between the front and the rear of the headlight (1) connected to a headlight (1) and extends with its free end section up to or beyond the rearward area of the headlight (1).

6. System for fixing headlights according to Claim 4 or 5, **characterised in that** the detent nose (12), the stop element (13) and the detent protrusion (14) jointly comprise at least one transversely extending joining surface (24) on which the detent protrusion (14) slides along during automatic detention of the detent nose (12).

7. System for fixing according to one of Claims 1 to 6, **characterised in that** both plug connections (3 and 4) are associated with a respective snap-on connection (5).

8. System for fixing according to one of Claims 1 to 7, **characterised in that** in addition to the plug connections (3 and 4) and the at least one snap-on connection there is at least one fixing device with an elastic resilient fixing element arranged on the headlight, comprising an elongated hole which extends in its longitudinal extent in the plug direction, and the fixing element is transposable by means of a fixing bolt which engages the elongated hole at the support element.

9. System for fixing according to one of Claims 1 to 8, **characterised in that** in addition to the two plug connections (3 and 4) and the at least one snap-on connection (5) there is at least one fixing device (17) established by a third plug connection with an adjusting element (18) which is adjustable vertically in the assembly position of the headlight and which is insertible into an accommodation part (19) the upper and lower side of which abuts the accommodation part (19) and vertically holds the headlight (1).

10. System for fixing according to Claim 9, **characterised in that** the adjusting element (18) is a hollow bolt which self-arrestingly engages in a threaded opening of a web (20) of the headlight (1) and which is insertible without play between two prongs of a fork-like accommodation element (19) of the support element (2), and the end surfaces of the hollow bolt abut the inner sides of the prongs.

## Revendications

1. Système de fixation pour phare (1) sur une partie de support (2) d'un véhicule, comportant au moins deux jonctions à enfichage (3 et 4) qui sont agencées entre la face antérieure et la face postérieure du phare (1), et comportant au moins une liaison par encliquetage (5) associée aux jonctions à enfichage (3 et 4), **caractérisé en ce que** les deux jonctions à enfichage (3 et 4) sont constituées par des parties d'enfichage (6 et 7) qui supportent ensemble sans jeu le phare (1) sur la partie de support (2) transversalement à la direction d'enfichage (8) dans toutes les directions, et ladite au moins une liaison par encliquetage supporte sans jeu le phare (1) entre deux propres surfaces d'appui (9 et 10) dans la direction d'enfichage et à l'opposé de la direction d'enfichage (8), pour les deux jonctions à enfichage (3 et 4), les propres surfaces d'appui (9 et 10) de la liaison par encliquetage (5) étant les seules qui servent à supporter le phare (1) dans la direction d'enfichage et à l'opposé de la direction d'enfichage (8).

2. Système de fixation selon la revendication 1, **caractérisé en ce que** des deux jonctions à enfichage (3 et 4), une première jonction à enfichage (3) porte le phare (1) dans toutes les directions transversalement à la direction d'enfichage (8) et une deuxième jonction à enfichage (4) porte le phare (1) uniquement à la verticale, et dans le cas de la deuxième jonction à enfichage (4), une première partie d'enfichage (6) est déplaçable horizontalement par rapport à une deuxième partie d'enfichage (7) transversalement à la direction d'enfichage (8).

3. Système de fixation selon l'une ou l'autre des revendications 1 et 2, **caractérisé en ce que** les parties d'enfichage (6 et 7) des jonctions à enfichage sont formées par une poche et par un tenon, l'axe médian de la poche et du tenon s'étendant parallèlement à la direction d'enfichage (8).

4. Système de fixation selon l'une des revendications 1 à 3, **caractérisé en ce que** ladite au moins une liaison par encliquetage (5) présente un bras d'enclenchement (11) à effet de ressort qui est tourné avec son extrémité libre dans la ou à l'opposé de la direction d'enfichage (8) et qui présente à son tronçon d'extrémité libre un ergot d'enclenchement (12) et un élément de butée (13) dont les côtés tournés l'un vers l'autre sont deux surfaces d'appui (9 et 10) de la liaison par encliquetage, entre lesquelles une saillie d'enclenchement (14) s'engage sans jeu avec des côtés (15) détournés.

5. Système de fixation selon la revendication 4, **caractérisé en ce que** le bras d'enclenchement (11) à effet de ressort est relié au phare (1) entre la face antérieure et la face postérieure du phare (1) et s'étend avec son tronçon d'extrémité libre jusqu'à la région postérieure du phare (1) ou au-delà de celle-ci.

6. Système de fixation selon l'une ou l'autre des revendications 4 et 5, **caractérisé en ce que** l'ergot d'enclenchement (12), l'élément de butée (13) et la saillie d'enclenchement (14) présentent ensemble au moins une surface d'insertion (24) s'étendant en biais, le long de laquelle la saillie d'enclenchement (14) glisse lors de l'enclenchement automatique de l'ergot d'enclenchement (12).

7. Système de fixation selon l'une des revendications 1 à 6, **caractérisé en ce qu'**aux deux jonctions à enfichage (3 et 4) est associée une liaison par encliquetage (5) respective.

8. Système de fixation selon l'une des revendications 1 à 7, **caractérisé en ce que**, additionnellement aux jonctions à enfichage (3 et 4) et à ladite au moins une liaison par encliquetage, il est prévu au moins un dispositif de fixation qui présente un élément de fixation élastiquement souple agencé sur le phare et comprenant un trou oblong qui, dans son extension longitudinale, s'étend en direction d'enfichage, l'élément de fixation pouvant être immobilisé sur la partie de support au moyen d'un boulon de fixation s'engageant dans le trou oblong.

9. Système de fixation selon l'une des revendications 1 à 8, **caractérisé en ce que**, additionnellement aux deux jonctions à enfichage (3 et 4) et à ladite au moins une liaison par encliquetage (5) il est prévu au moins un dispositif de fixation (17) qui est formé par une troisième jonction à enfichage qui présente un élément d'ajustage réglable à la verticale en position de montage du phare, et qui peut être inséré dans une partie de réception (19) dont la face supérieure et la face inférieure sont en appui sur la partie de réception (19) et porte le phare (1) à la verticale.

10. Système de fixation selon la revendication 9, **caractérisé en ce que** l'élément d'ajustage (18) est une vis creuse qui s'engage avec autoblocage dans une ouverture taraudée d'une patte (20) du phare (1) et qui peut être enfilée sans jeu entre deux dents d'une partie de réception (19), en forme de fourche, de la partie de support (2), les faces frontales de la vis creuse étant en appui sur les faces intérieures des dents.
